# EUROPEAN PATENT SPECIFICATION

(11) **EP 4 359 328 B1**
(45) Date of publication and mention of the grant of the patent: **31.12.2025**
(21) Application number: 22740430.8
(22) Date of filing: 21.06.2022
(51) Int. Cl.: B65G 35/06, B65G 47/74, G01N 35/04

(54) **SPECIMEN CARRIER TURNING DEVICE**
VORRICHTUNG ZUM DREHEN EINES PROBENTRÄGERS
DISPOSITIF DE MISE EN ROTATION DE PORTE-ÉCHANTILLON

(30) Priority: 22.06.2021 FI 20215734
(43) Date of publication of application: 01.05.2024
(73) Proprietor: Thermo Fisher Scientific Oy, 01620 Vantaa (FI)
(72) Inventor: MARKOZOV, Sergei, 01620 Vantaa (FI)
(74) Representative: Laine IP Oy
(86) International application number: PCT/FI2022/050443
(87) International publication number: WO 2022/269133

(56) References cited:
- EP-A1- 1 106 542
- WO-A1-2009/035391
- US-A- 5 605 218
- US-A1- 2016 289 011

## Description

### FIELD

The present invention relates to conveying devices in sample analysis systems and other types of automatic specimen handling systems in laboratory environments. The present invention particularly relates to turning devices that turn carriers carrying specimen samples.

### BACKGROUND

Clinical laboratories may be handling numerous patient samples per day. Each sample is unique and they must be tracked carefully during the entire process. To accomplish this many laboratories utilize automatic sample transportation systems. The samples are typically held in carriers which are transported between analysis or other sample handling stations by moving the carriers along conveyors running between the processing points. The samples are typically contained in sample tubes of various sizes and the carriers must be able to hold the tubes securely in all conditions. The samples are typically in liquid form, such as blood or components of blood, but could also be at least partly solid. The tubes may or may not be capped during the process. The tubes are labeled with a unique identifier such as a barcode which can be machine read automatically by the system. Also, the carriers typically contain data transmitting means to exchange information related to their cargo and their assigned route within the system.

It is sometimes necessary for a carrier to change its direction of travel and therefore travel on a non-linear path. To accomplish this, carriers are placed on turning devices. Different types of turning devices may be used in different parts of the conveyor system depending on whether the carrier is guided to travel to another conveyor track, to a sample handling station or to an analyzer after it has been turned by the turning device.

Some turning devices utilize belt-type conveyors configured in a way to turn the carriers, for example such as the turning modules at the ends of the conveyors disclosed in EP1106542. The belts on the conveyors for turning purposes need regular maintenance to ensure the belts are in appropriate tension. Additionally, this kind of turning mechanisms often requires use of additional parts such as tightening mechanisms which also need maintenance and add manufacturing cost. Since these turning devices often cause carriers to turn a sharp turn, the carrier does not travel as smoothly which may cause disturbance or disruption of the contents. This is especially harmful for samples containing separate liquid layers, for example centrifuged blood samples, which are not allowed to be mixed or disturbed, or contents having contamination danger. Some carriers may carry unique sample materials which cannot be replaced.

Further examples of carrier systems are disclosed in WO 2009/035391, US 2016/289011, US 5 605 218 and EP 1 106 542.

A problem with the prior art devices is that a small gap and/or a step is usually left between the conveyors and the turning device and depending on its structure, between the different conveying components on the turning devices. The top surface of the external conveyors, where the carrier travels on, is almost always misaligned with top surface of the conveying components on the turning device. The misalignment may cause the carrier to hit into the side of the turning device or the sides of the conveying components on the turning device, which causes tipping over the carrier, possibly causing spillage, or disrupting the contents. In order to overcome this problem, the operational speed must be lowered, however the overall operation efficiency of the system will suffer.

The conveying components and misalignment between the components on these turning devices may cause sudden shaking of the carrier and may shake and disrupt the contents being carried.

It is often difficult to maintain smooth travel within the turning devices, and consequently there is a need to improve the operation and construction provided by turning devices without compromising the speed of operation.

### SUMMARY OF THE INVENTION

A novel turning device is therefore herein described. The turning device features conveying platforms that rotate and transport a carrier.

The invention is defined by the features of the independent claims. Some specific embodiments are defined in the dependent claims.

According to a first aspect of the present disclosure, there is provided a turning device featuring a side guide forming a path, and a set of at least three coplanar conveying platforms arranged below and successively along the path. The turning device further includes a first and a third conveying platform having a first rotating direction and between them a second conveying platform having a rotating direction opposite to the first rotating direction.

One or more embodiments of the first aspect may include one or several features from the following itemized list alone or in any combination:
- the path extends in a horizontal direction
- the first end of the path is configured to receive a carrier, and the second end of the path is configured to exit the carrier from the turning device
- the guide has a plurality of guiding surfaces configured to guide the carrier along the path, in which the guide surfaces provide lateral (side) support to the carrier to ensure smooth transition of the carrier in an upright position
- the guide surfaces run parallel or slightly parallel to the path and are located on both opposing sides of the path in the horizontal plane
- a travel direction of the carrier at the second end of the path is horizontally between 45 and 315 degrees, preferably between 90 and 120 degrees, and more preferably 180 degrees relative to a travel direction of the carrier at the first end of the path
- the path is non-linear, particularly curved
- The platforms are aligned so that the rotating axles of the platforms are slightly displaced from a linear line while the path above them is non-linear, particularly curved and especially U-shaped.
- a radius of a curvature of the path adjacent to the first end of the path is reduced to 85% - 98% in radius length than that adjacent to the second end of the path, wherein the curvature of the path at the first end of the path causes a smooth transition of the carrier while travelling from the external conveyor to the turning device and prevents shaking of the carrier
- the carrier comprises a flat horizontal bottom surface, which has a round shape when viewed from the bottom; at least three flexible prongs to carry cargo, and data transmitting means
- the turning device has a plurality of adjustment screws, wherein at least one adjustment screw is axially connected to each of the conveying platforms in the set of at least three conveying platforms, and the adjustment screw is configured to increase or decrease the height of the respective and connecting conveying platform.
- the turning device comprises a drive or a master transmission to an external source of motion configured to drive at least one of the conveying platforms in the set of at least three conveying platforms
- the turning device comprises a slave transmission configured to transmit drive to at least one other conveying platform of the set of at least three conveying platforms
- the top surfaces of the conveying platforms are coplanar and have a flat top surface
- the conveying platforms are constructed as wheels
- the top surface of the conveying platforms have a coefficient of friction 0.15 - 0.25
- the turning device comprises a set of at least one gear having a first transmission gear and a second transmission gear
- at least one transmission gear in the set of at least one gear is connected to at least one of the conveying platforms of the set of at least three conveying platforms
- at least one transmission gear in the set of at least one gear is configured to transmit motion to at least one of the conveying platforms of the set of at least three conveying platforms
- each conveying platform of the set of at least three conveying platforms has a spur gear configured to engage with a spur gear on another conveying platform of the set of at least three conveying platforms. In other words, the platforms are synchronized with respect to their rotation via their respective spur gears In at least some embodiments, the spur gear is located below the top surface of the conveying platform.
- the transmission may be formed of toothed belt and sprockets or chain and sprocket transmission. In that case chain/belt guides would be needed to provide guide and tensioning elements for forming a desired path for the transmission element to provide correct turning directions.

According to a second aspect of the present invention, there is provided a conveyor system featuring a first conveyor configured to feed a carrier to a turning device according to the first aspect of the present disclosure including the features of the itemized list to the first aspect.

One or more embodiments of the second aspect may include one or several features from the following itemized list alone or in any combination:
- the conveyor system comprises a second conveyor configured to receive a carrier from the turning device and has a travel direction between 45 and 315 degrees relative to a travel direction of the first conveyor
- the travel direction of the first conveyor is aligned with a travel direction of the carrier on the first end of a path. The first conveyor feeds the carrier to the first platform.
- the top surfaces of platforms next to a conveyor are coplanar with the top surfaces of the conveyors. A top surface of the first conveyor platform is coplanar with a top surface of the first conveyor and the third platform is coplanar with a top surface of the second conveyor. The top surfaces of the conveying platforms are configured to allow the top surfaces of the conveying platforms to be coplanar with each other and coplanar with a top surface of an external conveyor.
- the master transmission of the turning device is configured to transmit motion of the first conveyor to at least one conveyor platform of the set of at least three conveyor platforms
- the first conveyor is configured to convey the carrier at a first travel velocity
- the turning device is configured to convey the carrier at a second travel velocity which is the same or at most 30 per cent greater or smaller than the first travel velocity

Considerable benefits are gained with the aid of novel turning devices configured on basis of at least some different features of the invention. The non-linear path ensures for smoother travel of the carrier so that a constant travel speed, which maintains the contents undisturbed, can be used even at higher operation speeds. The path allows for a smaller turning radius and thus saving system space. Additionally, the adjustment screws allow for the conveying platforms to be level with each other and level with the conveyors of the conveyor system and ensures that the carriers do not tip, spill their contents, or disturb the contents. This also allows using higher operation speeds in the turns. The turning device needs little maintenance since it is based on using conveying platforms instead of conveyor belts used with tightening mechanisms to turn the carrier and the heights of the conveying platforms are adjusted with the adjustment screws.

### BRIEF DESCRIPTION OF THE DRAWINGS

In the following certain exemplary embodiments are described in detail with reference to the accompanying drawings, in which:
- FIGURE 1: illustrates a perspective view of a turning device in accordance with at least some embodiments;
- FIGURE 2A: illustrates a top view of the turning device of FIGURE 1;
- FIGURE 2B: illustrates a cross-sectional view of the turning device along line A-A of FIGURE 2A;
- FIGURE 3: illustrates a bottom view of the turning device of FIGURE 1;
- FIGURE 4: illustrates a front elevation view of the turning device of FIGURE 1;
- FIGURE 5: illustrates a front elevation view of the turning device in accordance with another embodiment, and
- FIGURE 6: illustrates a top view of the turning device of FIGURE 1 and a conveyor system.
- FIGURE 7: illustrates a conveyor system in which the turning device may be utilized.

### EMBODIMENTS

*Synchrony* or *synchronized* is referred herein as the relationship between two or more movements such as rotation where the start of a rotation of an object causes the immediate start of a rotation of another object, i.e. when one dedicated object starts to rotate the remaining engaging and attached objects immediately starts to rotate. This also applies to when the object stops rotating.

In the present context, a turning device refers to a device for turning the direction of travel of a carrier while the carrier travels in a horizontal plane.

The proposed construction is based on the idea of proving a means to change the travel direction of the carrier with turning platforms with a relatively simple construction for the purpose of maximizing fast but smooth operation of the carriers in the turn while minimizing the risk of the carriers shaking, jamming, tipping over or spilling their contents.

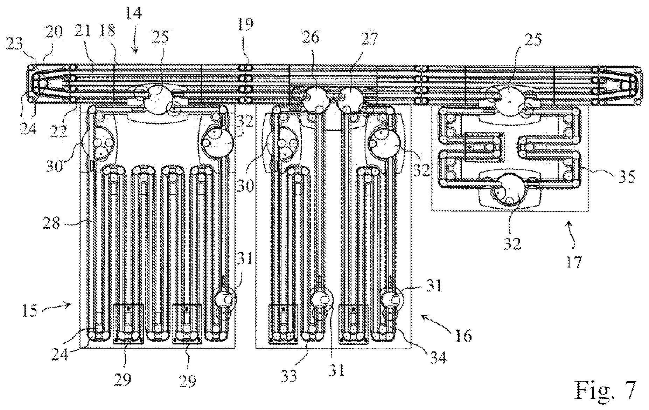

In order to facilitate understanding the operation and purpose of the invention, a short description of an example conveying system of EP1106542 is disclosed referring to the FIGURE 7.

Figure 7 shows one conveyor system implemented using the invention. This system comprises four main modules, i.e. cells, which are a large-capacity storage cell 15, a feed/removal buffer 16, a bypass cell 17, and a connecting conveyor 14. The conveyor comprises conveyor modules 18 of a predefined size, each of which has two tracks 21, 22 moving in opposite directions to each other. Thus, the straight conveyor modules 18 have four belts, arranged to travel in loops from one end of the module to the other. At the ends of the modules, there are belt pulleys. At the interfaces 19 between modules 18, the modules are simply connected mechanically to each other in such a way that the directions of movement of the tracks remain the same. No kind of operating device is needed at the interfaces to transfer the transport bases over the interfaces, making the connection as simple as possible. At the ends of the conveyor, there are turning modules 20, with a U-shaped track 23. The track of a turning module 20 has two belts similar to those in the straight modules, which are guided along the desired track by pulleys 24. The track of a turning module 20 is formed so that the ends of the track coincide with tracks 21, 22 of the conveyor modules, allowing turning modules 20 to be used to transfer transport bases to the straight conveyor track moving in the opposite direction.

The straight conveyor 14 is connected to the other modules in the system through control stations 25, 26, and 27.

The left-hand side of Figure 7 shows a storage cell 15 with a long winding conveyor 28, which can hold a large number of transport bases awaiting processing. The conveyor track of the storage cell can be selected freely, because a belt moving in an upright position can be easily arranged to travel along the desired track by means of pulleys 24, while the rails bounding the track can also be easily shaped to suit the desired track. The most compact construction, however, is obtained with parallel one-way track sections connected by 90°-curves. The storage cell described can be formed using two belt loops moving along the desired track in the same way as in the other cells, or else the cells can be assembled from components similar to those in the straight conveyor. As the belts in these special modules will become quite long, tensioning of each belt must be possible. This takes place using simple tensioning pieces 29, on which a pair of pulleys of one belt are mounted adjustably, to allow the pulleys' position to be altered. In the case of the 90°-bends of Figure 7, tensioning of both belts can be in the same tensioning piece, as the tensioning force for both belts acts outwards from the bend of the curve.

The other modules 16, 17 are constructed in basically the same way as the storage module described above. The purpose of the modules is varied by simply altering the shape of the track of the conveyor and arranging various control stations at the desired locations. There are three control stations in storage module 15, which is connected to the straight conveyor 18 by a fourth control station. Control station 25 connecting storage module 15 and conveyor 18 is a junction station, which is used to control traffic between the storage module 15 and conveyor 18. In storage module 15, the belts circulate anticlockwise, the first control station in the direction of movement being bypass station 30. The next is stopping station 31 and the last is operation station 32.

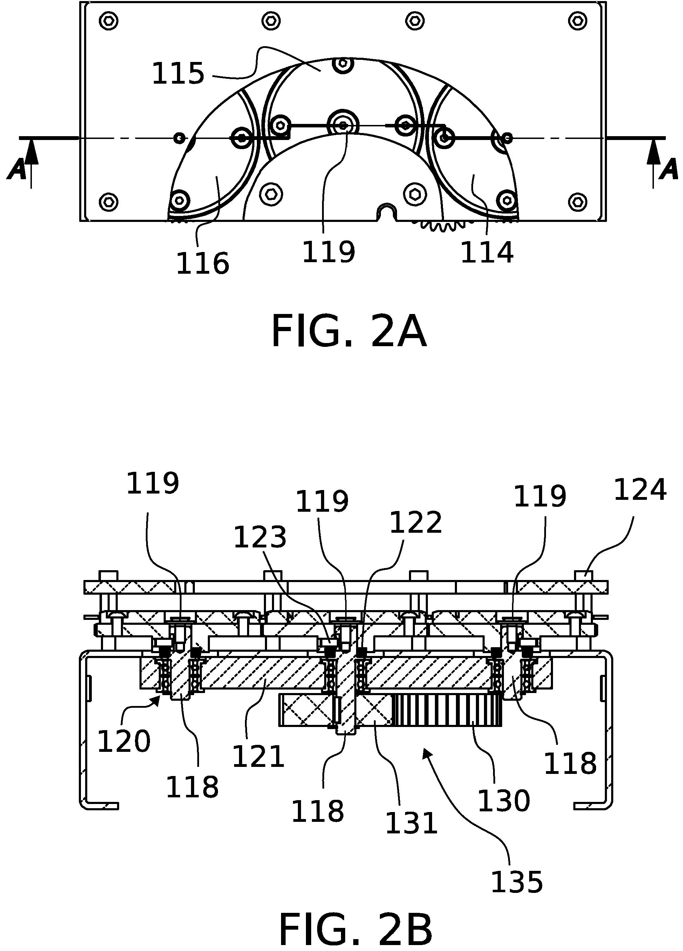

Feed/removal buffer 16 comprises two separate conveyor tracks 33, 34. Each track has a stopping station 31 to load transport bases onto the conveyor track or remove them from it. In Figure 2, the conveyor track of module 16 on the left-hand side of the figure is a removal track, comprising both a stopping station 31 and a bypass station 30. The track on the right is a feed track, in which there is an operation station 32. At feed track 34's operation point 32, there is preferably a barcode reader, which reads the test tube's barcode and enters the data required to process the sample into the RF memory circuit of the transport base. After this, the barcode need not be read anywhere else, unless the operation of some external device connected to the system requires this. Feed and removal tracks 34, 33 are connected to the conveyor through junction stations 27, 26. Bypass cell 17 is connected to conveyor 18 through junction 25 and contains a conveyor section 35 forming a short storage section, and a single operation station.

The turning device configured according to at least some embodiments of the invention may be utilized for example for replacing the turning unit 20 in the above described conveying system.

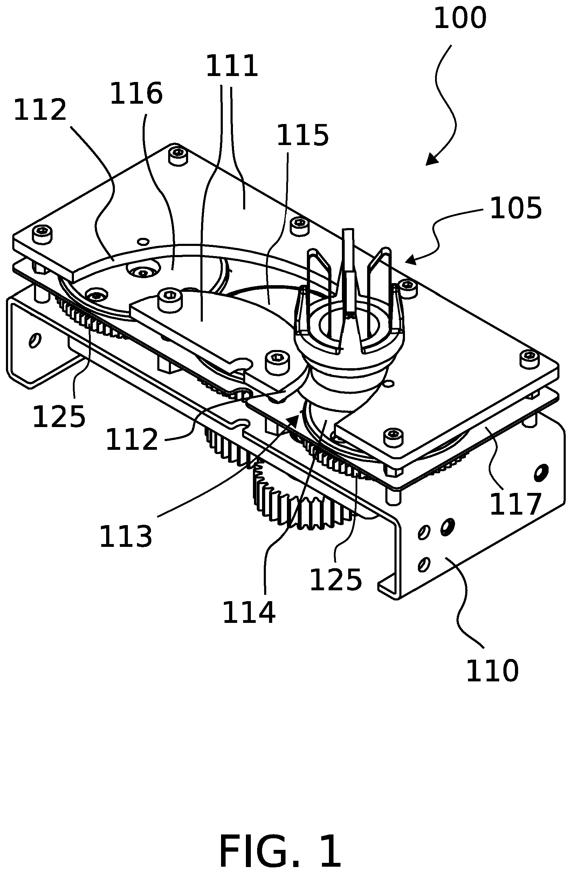

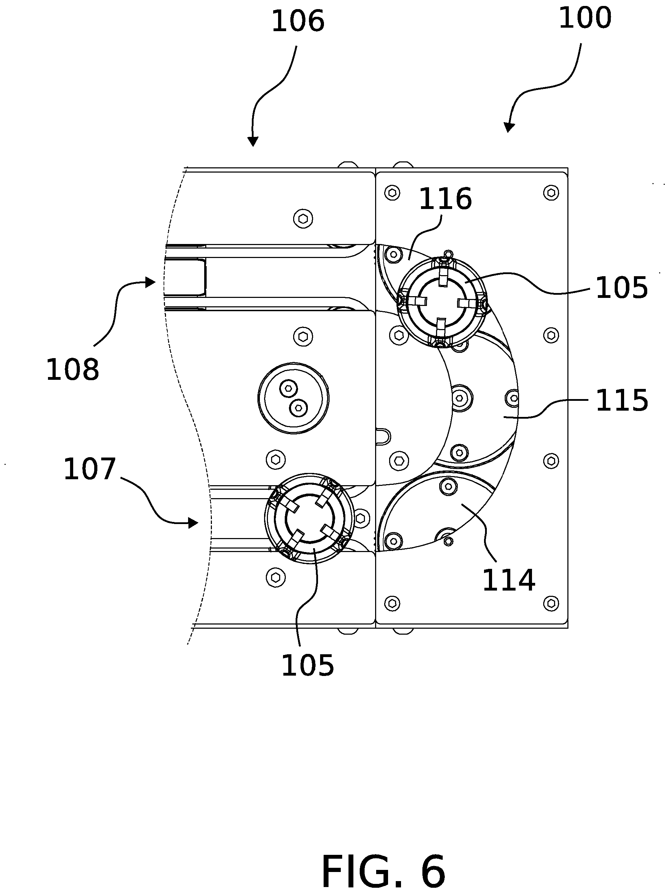

FIGURE 1 illustrates a turning device 100 in accordance with at least some embodiments. The turning device 100 has a frame 110, which may be attached to a conveyor system 106 or a support frame of the conveyor system 106 of Fig 6. The turning device 100 has a guide 111 for providing lateral support at the sides of the path. According to the illustrated embodiment, the guide 111 is shown in two separate units. The guide 111 creates a path 113 having a first end and a second end. According to the illustrated embodiment, the path 113 is curved. The guide 111 has a plurality of guiding surfaces 112, which guides a carrier on the path 113. According to the illustrated embodiment, the turning device 100 has a first conveying platform 114, a second conveying platform 115, and a third conveying platform 116, which are connected to a mounting plate 117. According to the illustrated embodiment, the mounting plate 117 is connected to the frame 110. According to the illustrated embodiment, the top surfaces of the conveying platforms 114, 115, 116 are not in contact with each other and are coplanar with each other.

FIGURE 6 illustrates the turning device 100 and the conveying system 106 in accordance with at least some embodiments. The conveying system has a first conveyor 107 and a second conveyor 108. The top surfaces of the conveying platforms 114, 115, 116 are coplanar with the top surfaces of the first and second conveyor 107, 108 which are configured to feed the carrier to the turning device 100 and receive the carrier from the turning device 100. The first conveying platform 114 is at the first end of the path 113 and the third conveying platform 116 is at the second end of the path 113.

According to FIGURE 2A and FIGURE 2B, each of the conveying platforms 114, 115, 116 are individually and axially connected to a first end of a shaft 118. Each of the conveying platforms 114, 115, 116 share an axis of rotation with the shaft 118 connected at the center of each conveying platform 114, 115, 116. Each conveying platform 114, 115, 116 has an adjustment screw 119 connected to the center of each conveying platform 114, 115, or 116 and to the shaft 118. A set screw 123 is connected to the frame 110 and may be connected to the adjustment screw 119. A spring 122 is coaxially connected to the outer surface of the shaft 118, where the spring 122 is connected to the frame 110. The shaft 118 has at least one bearing 120. According to the illustrated embodiment, the bearing 120 is housed in a bearing housing 121. A second transmission gear 131 is axially connected to a second end of the shaft 118 of the second conveying platform 115.

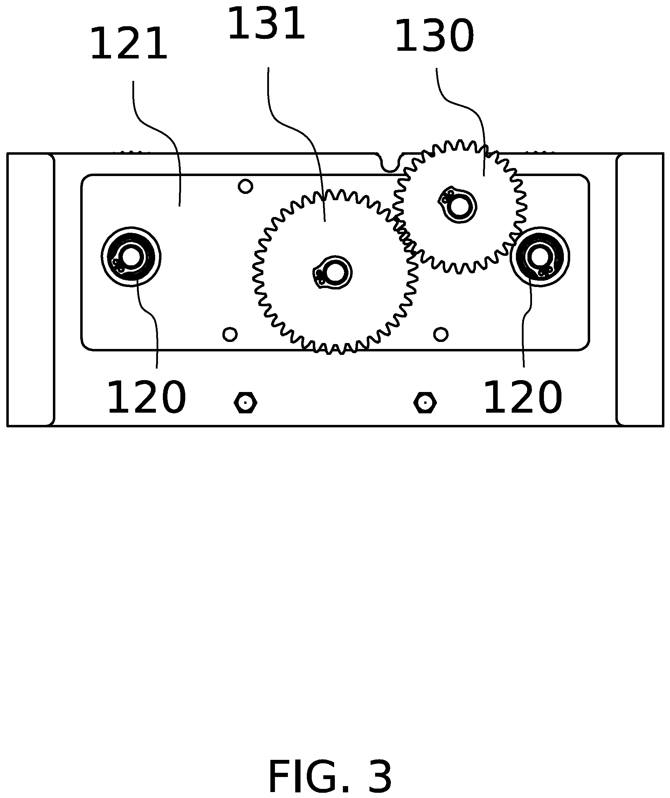

FIGURE 3 illustrates a bottom view of the turning device 100. According to the illustrated embodiment, the second transmission gear 131 is connected to a first transmission gear 130, where a bottom surface of the first transmission gear 130 is coplanar with a bottom surface of the second transmission gear 131. The first transmission gear 130 may be attached to the conveyor system 106 as shown in FIGURE 6.

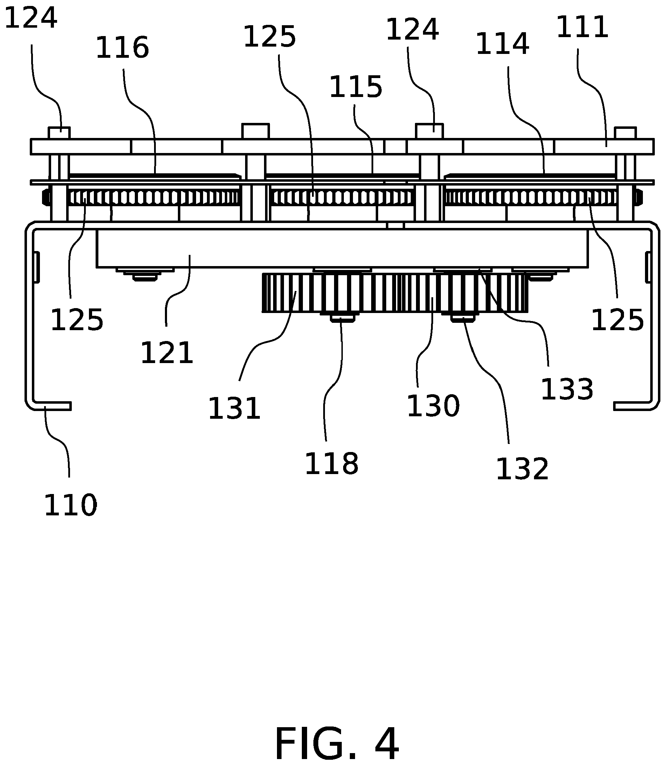

FIGURE 4 illustrates a front view of the turning device 100. According to the illustrated embodiment, the first transmission gear 130 is axially connected to a converter shaft 132. The converter shaft 132 is connected axially to a converter bearing 133 which is housed in the bearing housing 120. According to at least some embodiments, each conveying platform 114, 115, and 116 have a spur gear 125. The spur gear 125 may be located below the top surface of the respective conveying platform. Accordingly, the second conveying platform 115 transfers motion to the first conveying platform 114 and the third conveying platform 116 via spur gears 125 which allow for connection and transfer of motion between the conveying platforms 114, 115, 116. The first conveying platform 114 is connected to the second conveying platform 115 at their respective spur gears 125. The second conveying platform 115 is connected to the third conveying platform 116 at their respective spur gears 125. According to the illustrated embodiment, the guide 111 is attached to the frame 110. A plurality of fasteners 124 are connected to the frame 110 and to the guide 111.

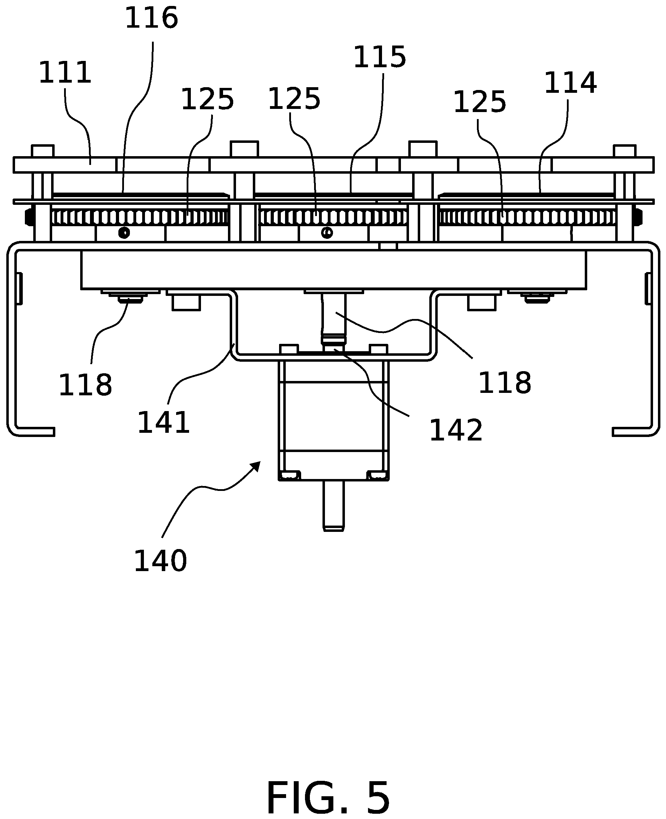

According to another embodiment as illustrated in FIGURE 5, the turning device 100 has a motor 140 and the conveying platforms 114, 115, 116 are driven by the motor 140. According to an embodiment as illustrated in FIGURE 5, the turning device 100 may not contain transmission gear since the motor 140 provides a drive directly to the shaft 118 and the conveying platforms 114, 115, 116. According to the illustrated embodiment, the motor 140 is mounted on a motor mount 141. The motor 140 has a motor shaft 142 which is coaxially connected to the shaft 118 of the second conveying platform 115.

The following paragraphs describe the usage of components of the turning device 100.

The turning device 100 is connected to a conveyor system 106 which has the first conveyor 107 and the second conveyor 108. According to an embodiment, the first and second conveyor 107, 108 are parallel and have opposing travel directions. The first conveyor 107 feeds a carrier to the turning device 100. The conveyor system 106 has a master transmission and the turning device 100 has a slave transmission 135. The master transmission provides a drive which may be powered by a motor of the conveyor system 106.

According to several embodiments, the carrier has a means to transport cargo. The cargo is primarily laboratory sample tubes which carry liquid samples. The samples are often required to be kept undisturbed, i.e. the contents may not agitate, mix, or spill. The carrier has a body that allows for travel along the path 113 guided by the guide 111 on each side of the path. The carrier has a flat horizontal bottom surface so that it may be safely placed on the top surfaces of the conveying platforms 114, 115, 116. The carrier's bottom surface is round when viewed from the bottom. The round shape allows for the carrier to travel along path 113 smoothly as it may be in contact with surfaces on the turning device 100. A body of the carrier may have a shape that matches or mirrors the guide 111 in order to travel along the guide 111 and the guiding surface 112. The carrier may have at least two flexible prongs, preferably at least three flexible prongs which hold the cargo. The carrier may have a means for transmitting data, for example with RFID and NFC communications.

As the turning device 100 receives the carrier, the carrier is placed on the top surface of the first conveying platform 114. The first conveying platform 114 rotates and causes the carrier to move along the path 113 starting from the first end of the path 113. The carrier is moved from the first conveying platform 114 to the second conveying platform 115, which rotates and causes the carrier to move along the path 113. The carrier is then moved from the second conveying platform 115 to the third conveying platform 116, which rotates and causes the carrier to move along the path 113 and reaching the second end of the path 113. The carrier moves from the third conveying platform 116 to the second conveyor. At this stage, the carrier is delivered from the turning device 100 to the second conveyor.

According to FIGURE 1 - FIGURE 5, the path 113 allows the carrier to change the direction of travel of the carrier. When the carrier is moved from the first conveyor 107 to the turning device 100, and therefore the first end of the path 113, the carrier has the same travel direction as the first conveyor 107. As the carrier moves from the first end of the path 113 to the second end of the path 113, its direction of travel gradually changes so that when the carrier is delivered from the turning device 100, and therefore the carrier is at the second end of the path 113, the direction of travel at the second end of the path 113 is at an angle of 180 degrees relative to the direction of travel at the first end of the path 113. In other words, the travel direction of the carrier at the first end of the path 113 is opposite of the travel direction of the carrier at the second end of the path 113.

According to the illustrated embodiments FIGURE 1 - FIGURE 4, the rotation of the conveying platforms 114, 115, 116 are caused by the motion of the conveyor system 106 via the master and slave transmission. To specify, the conveying platforms 114, 115, 116 are part of the slave transmission 135, which is configured to receive a drive from the master transmission. The slave transmission 135 comprises the first transmission gear 130, the second transmission gear 131, the shaft 118 of the second conveying platform 115, and the second conveying platform 115. The master transmission comprises the first conveyor 107 or a rotating element with a rotation deriving from the first conveyor 107. The master transmission transmits motion to the slave transmission 135. In other words, the motion of the first conveyor 107 in the master transmission is transferred to the first transmission gear 130 in the slave transmission 135, allowing the first transmission gear 130 to rotate. The first transmission gear 130 transfers motion to the second transmission gear 131, which rotates. As the second transmission gear 131 rotates, the shaft 118 of the second conveying platform 115 and the second conveying platform 115 rotate. The rotation of the second conveying platform 115 causes the first and third conveying platform 114, 116 to rotate by means of spur gears 125.

The spur gears 125 allow the conveying platforms 114, 115, 116 to rotate in synchrony. The nature of the platforms rotating via their spur gears means that every platform has a rotating direction opposite to the rotating direction of the adjacent platform.. The conveying platforms 114, 116 rotate at an angular velocity determined by the diameters of the conveying platforms 114, 115, 116 where the spur gears 125 are located. The conveying platforms 114, 116 rotate at their respective angular velocity also determined by the angular velocity of the conveying platform 115.

The rotation of the conveying platforms 114, 115, 116 allow the carrier to travel along the path 113. When the carrier has been delivered to the turning device 100, the carrier is held on the top surface of a conveying platform without slippage because of the friction forces between the top surfaces of the conveying platforms 114, 115, 116 and the bottom surface of the carrier. The carrier is moving while on the top surface of the conveying platforms 114, 115, 116 because the center point of the carrier is placed off-center relative to the center point of the conveying platforms 114, 115, 116, where there is rotational movement. The carriers move from one conveying platform to another conveying platform due to the carrier being forced by the guide 111. The guiding surfaces 112 applies forces to the carrier and causes slippage between the bottom surface of the carrier and the conveying platforms 114, 115, 116, i.e. the carrier can slide from one conveying platform to the succeeding conveying platform due to the guiding surfaces 112.

The carrier travels along the path 113 at a travel speed. The travel speed is determined by the diameters of the conveying platforms 114, 115, 116; the diameters of the first transmission gear 130 and the second transmission gear 131; and the speed of the conveying means of the first conveyor 107. The carrier travel speed while travelling on the turning device 100 may be the same as a carrier travelling speed while travelling on the first and second conveyor.

According to the illustrated embodiments of FIGURE 2A and FIGURE 2B, the adjustment screw 119 can be rotated by the user to allow for the adjustment screw 119 to move up and down along the center vertical axis of the adjustment screw 119. As the adjustment screw 119 moves along its center vertical axis, the top surface of the corresponding and connected conveying platform 114, 115, or 116 is displaced the same distance. The adjustment screw 119 is configured to adjust the height of the top surface of the conveying platforms 114, 115, 116 in order to allow for the top surfaces of the conveying platforms 114, 115, 116 to be coplanar. The height adjustment by the adjustment screw 119 allows for a continuous travel of the carrier and prevents the conveying platforms 114, 115, 116 from being vertically misaligned relative to each other, and thus, prevents the carrier from hitting an edge of the conveying platform and tipping over. The set screw 123 can be connected to the shaft 118 to lock the conveying platforms 114, 115, 116 in place. The set screw 123 can move away from the shaft 118 to allow the conveying platforms 114, 115, 116 to be translated on their central axis by using adjustment screw 119.

According to the illustrated embodiments of FIGURE 2A and FIGURE 2B, a bottom surface of the spring 122 is fixed to a boss of the shaft 118, where a top surface of the spring 122 is configured to provide vertical tension to the conveying platform 114, 115, 116. The spring 122, therefore allows for convenient height adjustment of the top surface of the conveying platforms 114, 115, 116 when the adjustment screw 119 is axially turned clockwise or counter-clockwise.

According to the illustrated embodiments FIGURE 2 - FIGURE 5, the bearing housing 121 provides a support structure and protection from the elements for the bearings 120, the converter bearing 133, the shafts 118, and the converter shaft 132.

The fasteners 124 are configured to fix the guide 111 to the frame 110.

According to an embodiment as illustrated in FIGURE 5, the motor shaft 142 of the motor 140 rotates by powering the motor 140. The rotation of the motor shaft 142 is transferred to the rotation of the shaft 118 of the second conveying platform and the second conveying platform 115. According to the illustrated embodiment, the motion of the second conveying platform is transferred to the first conveying platform and the third conveying platform separately.

According to the illustrated embodiment of FIGURE 5, the carrier travels along the path 113 at a travel speed determined by the diameters of the conveying platforms 114, 115, 116; the diameters of the first transmission gear 130 and the second transmission gear 131; and the angular velocity of the motor shaft 142. The carrier travel speed while travelling on the turning device 100 may be the same as a carrier travelling speed while travelling on the first and second conveyor. The output power of the motor 140 may be controlled to determine the travel speed of the carrier as the carrier travels along the path 113.

A person skilled in the art may foresee several variants of the above described embodiment. For example, another embodiment comprises the guide 111 which comprises of one unit. According to another embodiment the guide may comprise more than one unit. The guide 111 may be in the form of a plate or plates. The guide 111 may be a wall, multiple walls, a block, or multiple blocks. There may be one or more than one guiding surfaces 112 and the guiding surfaces 112 may match or mirror with the surface of the carrier so that the carrier is guided on the path 113 by the guiding surfaces 112. The material of the guide 111 may be plastic and may have a coefficient of friction suitable for smooth travel of the carrier. The travel direction of the carrier at the second end of the path 113 may be between 45 and 315 degrees relative to a travel direction of the carrier at the first end of the path 113, wherein the curvature of the path (113) causes a smooth transition of the carrier and prevents shaking of the carrier. The path is placed over the conveying platforms 112, 115, 116 so that the path is placed between the outer edge of each conveying platform and the centre of the rotating axle thereof. This allows conveying force directed to the carriers so that only forward movement is present. To facilitate this, the centres of rotating axles of the conveying platforms are slightly displaced from a straight line. This displacement also facilitates compact design using minimum space and allowing small overlaps between the conveying platfroms.

According to several embodiments, the turning device 100 may have three, five, seven, or an odd number of conveying platforms. The conveying platforms 114, 115, 116 may be directly connected to the mounting plate 117 or directly mounted to the frame 110. The conveying platforms 114, 115, 116 may be in contact with each other and may have a toothed outer surface or may be a spur gear to interact with each other. The conveying platforms 114, 115, 116 may interact with each other by means of a chain. The conveying platforms 114, 115, 116 may be separated slightly, where there may be no contact between them. According to at least some embodiments, the spur gears may be wheels and may interact with each other with a chain or belt or another means of transferring rotational motion known *per se.*

The conveying platforms 114, 115, 116 may rotate about a shaft with minimal friction while the shaft 118 may not have bearings. Alternatively, the shaft 118 may have a bearing 120 or more than one bearing. The shaft 118 is connected to the conveying platform 114, 115, 116 at an offset of the center of the conveying platform 114, 115, 116. The conveying platforms 114, 115, 116 may be connected to the first end, second end or in between the first end and second of the shaft 118. The bearing 120 may be housed in a bearing housing 121 or may be exposed to the elements, i.e. the bearings 120 may be uncovered. The material of the conveying platforms may be polyoxymethylene or a material with a similar coefficient of friction.

The conveyor system 106 may comprise the first conveyor 107 or may comprise a first conveyor 107 and a second conveyor 108 or may comprise more than two conveyors. According to an embodiment, the conveyor system 106 may comprise one conveyor at the first end of the path 113 and may comprise a container at the second end of the path 113 to drop the carriers into the container or for storing the carriers or its contents. The travel direction of the first conveyor 107 may be parallel and opposite to the second conveyor. The travel direction of the first conveyor 107 may be between 45 and 315 degrees, relative to a travel direction of the carrier at the first end of the path 113.

According to an embodiment, the slave transmission 135 may have one or more than one transmission gears. In another embodiment, the first transmission gear 130 and the second transmission gear may be wheels and may interact with each other with a chain or belt or another means of transferring rotational motion known *per se.*

The second transmission gear 131 may be connected to the first, second, or third conveying platform. The second transmission gear 131 may be connected to the first end, second end or in between the first end and second of the shaft 118. The second transmission gear 131 may be directly or indirectly connected to the first or second conveyor. The bottom surfaces of the second transmission gear 131 and the first transmission gear 130 may be coplanar and have or may have an offset to between their planes.

The first transmission gear 130 may transfer motion from the conveyor system 106 to the first conveying platform 114, the second conveying platform 115, or the third conveying platform 116. The first transmission gear 130 may directly connected to the shaft 118, and therefore, directly transfer motion to the shaft 118 or the transfer gears 114, 115, 116.

The fasteners 124 may be rivets, screws, bolts and nuts, bolts, nails, or another fastening means known *per se.*

According to another embodiment, the height of the conveying platforms 114, 115, 116 may be adjusted by electronic means, by a threaded rod, or by friction fitting.

The motor may be directly connected to the motor mount 141 frame 110 or the bearing housing 121. The motor shaft 142 may be directly connected to the shaft 118 of the first conveying platform, the second conveying platform, or the third conveying platform.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

| **No.** | **Feature** | **No.** | **Feature** |
|---|---|---|---|
| 100 | turning device | 120 | bearing |
| 105 | carrier | 121 | bearing housing |
| 106 | conveyor system | 122 | spring |
| 107 | first conveyor | 123 | set screw |
| 108 | second conveyor | 124 | fasteners |
| 110 | frame | 125 | spur gears |
| 111 | guide | 130 | first transmission gear |
| 112 | guiding surfaces | 131 | second transmission gear |
| 113 | path | 132 | converter shaft |
| 114 | first conveying platform | 133 | converter bearing |
| 115 | second conveying platform | 135 | slave transmission |
| 116 | third conveying platform | 140 | motor |
| 117 | mounting plate | 141 | motor mount |
| 118 | shaft | 142 | motor shaft |
| 119 | adjustment screw | | |

## Claims

1. A turning device (100) for transferring a carrier (105) comprising:
- a guide (111) configured to form a path (113) having a first end and a second end
and
- a set of at least three conveying platforms having to p surfaces arranged below and successively along the path (113), wherein the top surfaces are mutually coplanar and wherein the platforms are configured to rotate in synchrony for transferring a carrier (105) when placed on top of one of the to surfaces so that:
∘ a first, third, and any odd number of conveying platform (114, 116) have a first rotating direction and
∘ a second conveying platform (115) has a direction opposite to the first rotating direction.

2. The turning device (100) according to claim 1, wherein the first end of the path (113) is configured to receive a carrier, and the second end of the path (113) is configured to exit the carrier from the turning device (100).

3. The turning device (100) according to claim 1 or 2, wherein the guide (111) has a plurality of guiding surfaces (112) configured to guide the carrier along the path (113).

4. The turning device (100) according to any of the preceding claims, wherein a travel direction of the carrier at the second end of the path (113) is between 45 and 315 degrees, preferably between 90 and 120 degrees, and more preferably 180 degrees relative to a travel direction of the carrier at the first end of the path (113).

5. The turning device (100) according to any of the preceding claims, wherein the path (113) is non-linear, particularly curved.

6. The turning device (100) according to any of the preceding claims, wherein a radius of a curvature of the path (113) adjacent to the first end of the path (113) is smaller than that adjacent to the second end of the path (113.

7. The turning device (100) according to any of the claims 1 - 6, wherein the path (113) is placed over the conveying platforms (112, 115, 116) so that the path is placed between the outer edge of each conveying platform (114, 115, 116) and the centre of the rotating axle thereof.

8. The turning device (100) according to any of the preceding claims, wherein the turning device (100) has a plurality of adjustment screws (119), wherein:
- at least one adjustment screw (119) is axially connected to each of the conveying platforms (114, 115, 116) in the set of at least three conveying platforms, and
- the adjustment screw (119) is configured to increase or decrease the height of the respective and connecting conveying platform.

9. The turning device (100) according to any of the preceding claims, wherein the turning device (100) comprises a drive or a master transmission to an external source of motion configured to drive at least one of the conveying platforms in the set of at least three conveying platforms.

10. The turning device (100) according to any of the preceding claims, wherein the turning device (100) comprises a slave transmission (135) configured to transmit drive to at least one other conveying platform of the set of at least three conveying platforms.

11. The turning device (100) according to any of the preceding claims, wherein the coefficient of friction of the top surfaces of the conveying platforms (114, 115, 116) is 0.15 - 0.25.

12. The turning device (100) according to any of the preceding claims wherein the conveying platforms (114, 115, 116) are constructed as wheels.

13. The turning device (100) according to any of the preceding claims, wherein the turning device (100) comprises a set of at least one gear having a first transmission gear (130) and a second transmission gear (131), wherein:
- at least one transmission gear (130) in the set of at least one gear is connected to at least one of the conveying platforms of the set of at least three conveying platforms, and
- at least one transmission gear (130) in the set of at least one gear is configured to transmit motion to at least one conveying platforms of the set of at least three conveying platforms.

14. The turning device (100) according to any of the preceding claims, wherein each conveying platform of the set of at least three conveying platforms has a surface having spur gears (125) configured to engage with another surface having spur gears (125) on another conveying platform of the set of at least three conveying platform.

15. A conveyor system (106) for conveying carriers comprising a turning device according to one of the claims 1 - 14 and a first conveyor (107) configured to feed a carrier to the turning device (100).

16. The conveyor system (106) according to claim 15, wherein the conveyor system (106) comprises a second conveyor (108) configured to receive a carrier from the turning device (100) and has a travel direction between 45 and 315 degrees relative to a travel direction of the first conveyor (107).

17. The conveyor system (106) according to claim 14, wherein the travel direction of the first conveyor (107) is aligned with a travel direction of the carrier on the first end of a path (113).

18. The conveyor system (106) according to any one of the preceding claims 15 to 17, wherein a top surface of a conveyor platform of the set of at least three conveyor platforms is coplanar with a top surface of at least the first conveyor (107).

19. The conveyor system (106) according to any one of the preceding claims 15 to 18, wherein the master transmission of the turning device is configured to transmit motion of the first conveyor (107) to at least one conveyor platform of the set of at least three conveyor platforms.

20. The conveyor system (106) according to any one of the preceding claims 15 to 19, wherein:
- the first conveyor (107) is configured to convey the carrier at a first travel velocity, and
- the turning device is configured to convey the carrier at a second travel velocity which is the same or at most 30 per cent greater or smaller than the first travel velocity.

21. The conveyor system (106) according to any of the preceding claims 15 - 20, wherein the carrier comprises:
- a flat horizontal bottom surface, which has a round shape when viewed from the bottom;
- at least three flexible prongs to carry cargo, and
- data transmitting means.

## Patentansprüche

1. Drehvorrichtung (100) zum Übertragen eines Trägers (105), umfassend:
- eine Führung (111), die konfiguriert ist, um einen Pfad (113), der ein erstes und ein zweites Ende aufweist, zu bilden, und
- ein Satz von mindestens drei Förderplattformen, die Oberflächen aufweisen, die unterhalb und nacheinander entlang des Pfades (113) angeordnet sind, wobei die Oberflächen zueinander koplanar sind und wobei die Plattformen konfiguriert sind, um sich zum Transportieren eines Trägers (105) synchron zu drehen, wenn sie auf einer der Oberflächen platziert werden, sodass:
∘ eine erste, dritte und jede ungerade Anzahl von Förderplattformen (114, 116) eine erste Drehrichtung aufweisen und
∘ eine zweite Förderplattform (115) eine Richtung, die der ersten Drehrichtung entgegengesetzt ist, aufweist.

2. Drehvorrichtung (100) nach Anspruch 1, wobei das erste Ende des Pfades (113) zur Aufnahme eines Trägers und das zweite Ende des Pfades (113) zur Ausgabe des Trägers aus der Drehvorrichtung (100) konfiguriert ist.

3. Drehvorrichtung (100) nach Anspruch 1 oder 2, wobei die Führung (111) eine Vielzahl von Führungsflächen (112) aufweist, die konfiguriert sind, um den Träger entlang des Pfades (113) zu führen.

4. Drehvorrichtung (100) nach einem der vorstehenden Ansprüche, wobei eine Bewegungsrichtung des Trägers am zweiten Ende des Pfades (113) zwischen 45 und 315 Grad, vorzugsweise zwischen 90 und 120 Grad und besonders bevorzugt 180 Grad relativ zur Bewegungsrichtung des Trägers am ersten Ende des Pfades (113) beträgt.

5. Drehvorrichtung (100) nach einem der vorstehenden Ansprüche, wobei der Pfad (113) nicht linear, insbesondere gekrümmt, ist.

6. Drehvorrichtung (100) nach einem der vorstehenden Ansprüche, wobei ein Krümmungsradius des Pfades (113), der an das erste Ende des Pfades (113) angrenzt, kleiner ist als derjenige, der an das zweite Ende des Pfades (113) angrenzt.

7. Drehvorrichtung (100) nach einem der Ansprüche 1 bis 6, wobei der Pfad (113) über den Förderplattformen (112, 115, 116) so angeordnet ist, dass der Pfad zwischen der Außenkante jeder Förderplattform (114, 115, 116) und der Mitte ihrer Drehachse liegt.

8. Drehvorrichtung (100) nach einem der vorstehenden Ansprüche, wobei die Drehvorrichtung (100) eine Vielzahl von Einstellschrauben (119) aufweist, wobei:
- mindestens eine Stellschraube (119) axial mit jeder der Förderplattformen (114, 115, 116) in dem Satz von mindestens drei Förderplattformen verbunden ist, und
- die Stellschraube (119) konfiguriert ist, um die Höhe der jeweiligen und der verbundenen Förderplattform zu erhöhen oder verringern.

9. Drehvorrichtung (100) nach einem der vorstehenden Ansprüche, wobei die Drehvorrichtung (100) einen Antrieb oder ein Hauptgetriebe zu einer externen Bewegungsquelle umfasst, die konfiguriert ist, um mindestens eine der Förderplattformen in dem Satz von mindestens drei Förderplattformen anzutreiben.

10. Drehvorrichtung (100) nach einem der vorstehenden Ansprüche, wobei die Drehvorrichtung (100) ein Hilfsgetriebe (135) umfasst, das konfiguriert ist, um Antrieb auf mindestens eine andere Förderplattform aus dem Satz von mindestens drei Förderplattformen zu übertragen.

11. Drehvorrichtung (100) nach einem der vorstehenden Ansprüche, wobei der Reibungskoeffizient der Oberflächen der Förderplattformen (114, 115, 116) 0,15 bis 0,25 beträgt.

12. Drehvorrichtung (100) nach einem der vorstehenden Ansprüche, wobei die Förderplattformen (114, 115, 116) als Räder ausgeführt sind.

13. Drehvorrichtung (100) nach einem der vorstehenden Ansprüche, wobei die Drehvorrichtung (100) einen Satz von mindestens einem Zahnrad mit einem ersten Übertragungszahnrad (130) und einem zweiten Übertragungszahnrad (131) umfasst, wobei:
- mindestens ein Übertragungszahnrad (130) des Satzes von mindestens einem Zahnrad mit mindestens einer der Förderplattformen aus dem Satz von mindestens drei Förderplattformen verbunden ist
- mindestens ein drei Übertragungszahnrad (130) des Satzes von mindestens einem Zahnrad konfiguriert ist, um eine Bewegung auf mindestens eine Förderplattform aus dem Satz von mindestens drei Förderplattformen zu übertragen.

14. Drehvorrichtung (100) nach einem der vorstehenden Ansprüche, wobei jede Förderplattform des Satzes von mindestens drei Förderplattformen eine Fläche mit Stirnrädern (125) aufweist, die konfiguriert sind, um mit einer anderen Fläche mit Stirnrädern (125) auf einer anderen Förderplattform aus dem Satz von mindestens drei Förderplattformen ineinanderzugreifen.

15. Fördersystem (106) zum Transport von Trägern, umfassend eine Drehvorrichtung nach einem der Ansprüche 1 bis 14 und ein erster Förderer (107), der konfiguriert ist, um einen Träger der Drehvorrichtung (100) zuzuführen.

16. Fördersystem (106) nach Anspruch 15, wobei das Fördersystem (106) einen zweiten Förderer (108) umfasst, der konfiguriert ist, um einen Träger von der Drehvorrichtung (100) aufzunehmen, und eine Bewegungsrichtung zwischen 45 und 315 Grad relativ zu einer Bewegungsrichtung des ersten Förderers (107) aufweist.

17. Fördersystem (106) nach Anspruch 14, wobei die Bewegungsrichtung des ersten Förderers (107) an der Bewegungsrichtung des Trägers am ersten Ende eines Pfades (113) ausgerichtet ist.

18. Fördersystem (106) nach einem der vorstehenden Ansprüche 15 bis 17, wobei eine Oberfläche einer Förderplattform aus dem Satz von mindestens drei Förderplattformen koplanar zu der Oberfläche mindestens des ersten Förderers (107) ist.

19. Fördersystem (106) nach einem der vorstehenden Ansprüche 15 bis 18, wobei das Hauptgetriebe der Drehvorrichtung konfiguriert ist, um Bewegung des ersten Förderers (107) auf mindestens eine Förderplattform aus dem Satz von mindestens drei Förderplattformen zu übertragen.

20. Fördersystem (106) nach einem der vorstehenden Ansprüche 15 bis 19, wobei:
- der erste Förderer (107) konfiguriert ist, um den Träger mit einer ersten Bewegungsgeschwindigkeit zu befördern, und
- die Drehvorrichtung konfiguriert ist, um den Träger mit einer zweiten Bewegungsgeschwindigkeit zu befördern, die gleich der ersten Bewegungsgeschwindigkeit oder höchstens 30 Prozent größer oder kleiner als die erste Bewegungsgeschwindigkeit ist.

21. Fördersystem (106) nach einem der vorstehenden Ansprüche 15 bis 20, wobei der Träger umfasst:
- eine flache, horizontale Bodenfläche, die von unten betrachtet eine runde Form aufweist;
- mindestens drei flexible Zinken zum Transport von Ladung, und
- Datenübertragungsmittel.

## Revendications

1. Dispositif tournant (100) pour le transfert d'un support (105) comprenant :
- un guide (111) conçu pour former un chemin (113) ayant une première extrémité et une seconde extrémité et
- un ensemble d'au moins trois plates-formes de transport ayant des surfaces supérieures disposées en dessous et successivement le long du chemin (113), dans lequel les surfaces supérieures sont mutuellement coplanaires et dans lequel les plates-formes sont conçues pour tourner de manière synchronisée afin de transférer un support (105) lorsqu'il est placé sur l'une des surfaces supérieures de sorte que :
O une première, une troisième et un quelconque nombre impair de plates-formes de transport (114, 116) ont une première direction de rotation et
O une deuxième plate-forme de transport (115) a une direction opposée à la première direction de rotation.

2. Dispositif tournant (100) selon la revendication 1, dans lequel la première extrémité du chemin (113) est conçue pour recevoir un support, et la seconde extrémité du chemin (113) est conçue pour faire sortir le support du dispositif tournant (100).

3. Dispositif tournant (100) selon la revendication 1 ou 2, dans lequel le guide (111) a une pluralité de surfaces de guidage (112) conçues pour guider le support le long du chemin (113).

4. Dispositif tournant (100) selon l'une quelconque des revendications précédentes, dans lequel une direction de déplacement du support au niveau de la seconde extrémité du chemin (113) est entre 45 et 315 degrés, de préférence entre 90 et 120 degrés, et plus préférablement de 180 degrés par rapport à une direction de déplacement du support au niveau de la première extrémité du chemin (113).

5. Dispositif tournant (100) selon l'une quelconque des revendications précédentes, dans lequel le chemin (113) est non linéaire, en particulier, incurvé.

6. Dispositif tournant (100) selon l'une quelconque des revendications précédentes, dans lequel un rayon de courbure du chemin (113) adjacent à la première extrémité du chemin (113) est plus petit que celui adjacent à la seconde extrémité du chemin (113).

7. Dispositif tournant (100) selon l'une quelconque des revendications 1 à 6, dans lequel le chemin (113) est placé sur les plates-formes de transport (112, 115, 116) de sorte que le chemin soit placé entre le bord extérieur de chaque plate-forme de transport (114, 115, 116) et le centre de l'axe de rotation de celle-ci.

8. Dispositif tournant (100) selon l'une quelconque des revendications précédentes, dans lequel le dispositif tournant (100) présente une pluralité de vis de réglage (119), dans lequel :
- au moins une vis de réglage (119) est reliée axialement à chacune des plates-formes de transport (114, 115, 116) dans l'ensemble d'au moins trois plates-formes de transport, et
- la vis de réglage (119) est conçue pour augmenter ou diminuer la hauteur de la plate-forme de transport respective et de liaison.

9. Dispositif tournant (100) selon l'une quelconque des revendications précédentes, dans lequel le dispositif tournant (100) comprend un entraînement ou une transmission principale à une source externe de mouvement conçue pour entraîner au moins l'une des plates-formes de transport dans l'ensemble d'au moins trois plates-formes de transport.

10. Dispositif tournant (100) selon l'une quelconque des revendications précédentes, dans lequel le dispositif tournant (100) comprend une transmission esclave (135) conçue pour transmettre l'entraînement à au moins une autre plate-forme de transport de l'ensemble d'au moins trois plates-formes de transport.

11. Dispositif tournant (100) selon l'une quelconque des revendications précédentes, dans lequel le coefficient de frottement des surfaces supérieures des plates-formes de transport (114, 115, 116) est de 0,15 à 0,25.

12. Dispositif tournant (100) selon l'une quelconque des revendications précédentes dans lequel les plates-formes de transport (114, 115, 116) sont construites en guise de roues.

13. Dispositif tournant (100) selon l'une quelconque des revendications précédentes, dans lequel le dispositif tournant (100) comprend un ensemble d'au moins un engrenage ayant un premier engrenage de transmission (130) et un second engrenage de transmission (131), dans lequel :
- au moins un engrenage de transmission (130) dans l'ensemble d'au moins un engrenage est relié à au moins l'une des plates-formes de transport de l'ensemble d'au moins trois plates-formes de transport, et
- au moins un engrenage de transmission (130) dans l'ensemble d'au moins un engrenage est conçu pour transmettre un mouvement à au moins une plate-forme de transport de l'ensemble d'au moins trois plates-formes de transport.

14. Dispositif tournant (100) selon l'une quelconque des revendications précédentes, dans lequel chaque plate-forme de transport de l'ensemble d'au moins trois plates-formes de transport a une surface comportant des engrenages droits (125) conçus pour entrer en prise avec une autre surface comportant des engrenages droits (125) sur une autre plate-forme de transport de l'ensemble d'au moins trois plates-formes de transport.

15. Système transporteur (106) pour le transport de supports comprenant un dispositif tournant selon l'une quelconque des revendications 1 à 14 et un premier transporteur (107) conçu pour introduire un support dans le dispositif tournant (100).

16. Système transporteur (106) selon la revendication 15, dans lequel le système transporteur (106) comprend un second transporteur (108) conçu pour recevoir un support du dispositif tournant (100) et a une direction de déplacement entre 45 et 315 degrés par rapport à la direction de déplacement du premier transporteur (107).

17. Système transporteur (106) selon la revendication 14, dans lequel la direction de déplacement du premier transporteur (107) est alignée sur une direction de déplacement du support sur la première extrémité d'un chemin (113).

18. Système transporteur (106) selon l'une quelconque des revendications 15 à 17 précédentes, dans lequel une surface supérieure d'une plate-forme de transporteur de l'ensemble d'au moins trois plates-formes de transporteur est coplanaire avec une surface supérieure d'au moins le premier transporteur (107).

19. Système transporteur (106) selon l'une quelconque des revendications 15 à 18 précédentes, dans lequel la transmission principale du dispositif tournant est conçue pour transmettre un mouvement du premier transporteur (107) à au moins une plate-forme de transporteur de l'ensemble d'au moins trois plates-formes de transporteur.

20. Système transporteur (106) selon l'une quelconque des revendications 15 à 19 précédentes, dans lequel :
- le premier transporteur (107) est conçu pour transporter le support à une première vitesse de déplacement, et
- le dispositif tournant est conçu pour transporter le support à une seconde vitesse de déplacement qui est identique ou au plus supérieure ou inférieure de 30 pour cent à la première vitesse de déplacement.

21. Système transporteur (106) selon l'une quelconque des revendications 15 à 20 précédentes, dans lequel le support comprend :
- une surface inférieure horizontale plate, qui a une forme ronde lorsqu'elle est vue du dessous ;
- au moins trois branches flexibles pour transporter des marchandises, et
- des moyens de transmission de données.
